# EUROPEAN PATENT APPLICATION

(11) **EP 3 712 800 A2**
(43) Date of publication of application: **23.09.2020**
(21) Application number: 20163562.0
(22) Date of filing: 17.03.2020
(51) Int. Cl.: G06F 30/10, G06F 111/02

(54) **DRAWING CREATION SUPPORT APPARATUS, DRAWING CREATION SUPPORT PROGRAM, AND DRAWING CREATION SUPPORT METHOD**

(30) Priority: 22.03.2019 JP 2019055211; 29.07.2019 JP 2019139133
(71) Applicant: FUJITSU LIMITED, Kanagawa 211-8588 (JP)
(72) Inventor: Yamazaki, Toshiya, Kanagawa, 211-8588 (JP); Nishimura, Tomohiro, Kanagawa, 211-8588 (JP)
(74) Representative: Hoffmann Eitle

(57) **Abstract**

A drawing creation support apparatus includes: an input reception unit configured to receive input of two pieces of data, one of the two pieces of data being data for indicating a procedure of a combination of a plurality of drawings; a virtual drawing generation unit configured to generate virtual drawing data based on the data for indicating the procedure; and an output unit configured to output a comparison result between the virtual drawing data that is generated and another comparison data of the two pieces of data.

## Description

### FIELD

The embodiments discussed herein are related to a drawing creation support apparatus, a computer-readable recording medium, and a drawing creation support method.

### BACKGROUND

In the related art, design drawings of various products, information processing systems, and the like have been created by using a CAD system or the like, and changing the design drawing of the information processing system in accordance with a change of components is ordinarily performed, for example. In the related art, when the design drawing is changed, an instruction document for instructing construction contents in order to revise the information processing system is created based on a difference between the design drawing before the change and the design drawing after the change.

Japanese Laid-open Patent Publication No. 2005-141778 is an example of the related art and Japanese Laid-open Patent Publication No. 04-25972 is another example of the related art.

Changes for the design drawing includes a change that is scheduled and a change that occurs suddenly. Accordingly, a sudden change is required in some cases while the change that is scheduled is being added to the design drawing.

In this case, an existing method has been known in which a design drawing during addition of a change is returned to an original state, a sudden change is added thereto, a construction instruction document is generated from a difference between the two, and then the scheduled change is added again. As another method, an existing method has been known in which a construction instruction document is generated from a difference between a design drawing during addition of a change and a design drawing obtained by adding a sudden change to this design drawing, and then the scheduled change is further added.

However, in the former method of the above-described methods, since the change once added is restored, wasteful man-hours increase.

In the latter method of the above-described methods, a difference between the original design drawing before adding the change and the design drawing to which the sudden change is added is not extracted. Therefore, in the latter method, work is required to modify the generated instruction document of the construction so as to be an instruction document of construction for an information processing system operating in a state of the original design drawing, which is a burden to a worker.

Accordingly, in the related art, a method for suppressing an increase in the number of man-hours and an increase in the workload associated with the change in the design drawing has been sought.

In one aspect, an object of the embodiments is to enable comparison between data having different input formats.

### SUMMARY

According to an aspect of the embodiments, a drawing creation support apparatus includes: an input reception unit configured to receive input of two pieces of data, one of the two pieces of data being data for indicating a procedure of a combination of a plurality of drawings; a virtual drawing generation unit configured to generate virtual drawing data based on the data for indicating the procedure; and an output unit configured to output a comparison result between the virtual drawing data that is generated and another comparison data of the two pieces of data.

### BRIEF DESCRIPTION OF DRAWINGS

FIG. 1 is a diagram illustrating an example of a design support system of a first embodiment;
FIG. 2 is a first diagram for describing an overview of operations of the design support system according to the first embodiment;
FIG. 3 is a second diagram for describing an overview of operations of the design support system according to the first embodiment;
FIG. 4 is a diagram illustrating an example of a hardware configuration of a design support apparatus according to the first embodiment;
FIG. 5 is a diagram for describing a function of the design support apparatus according to the first embodiment;
FIG. 6 is a diagram for describing a function of a comparison result output unit according to the first embodiment;
FIG. 7 is a first flowchart for describing processing of the design support apparatus according to the first embodiment;
FIG. 8 is a second flowchart for describing the processing of the design support apparatus according to the first embodiment;
FIG. 9 is a diagram illustrating a specific example of procedure data of the first embodiment;
FIG. 10 is a third flowchart for describing the processing performed by the design support apparatus according to the first embodiment;
FIG. 11 is a fourth flowchart for describing the processing performed by the design support apparatus according to the first embodiment;
FIG. 12 is a first diagram for describing a change in a value of each variable of the first embodiment;
FIG. 13 is a second diagram for describing the change in the value of each variable of the first embodiment;
FIG. 14 is a third diagram for describing the change in the value of each variable of the first embodiment;
FIGs. 15A and 15B are a first diagram illustrating a display example of a terminal apparatus of the first embodiment;
FIGs. 16A and 16B are a second diagram illustrating a display example of the terminal apparatus of the first embodiment;
FIGs. 17A and 17B are a third diagram illustrating a display example of the terminal apparatus of the first embodiment;
FIG. 18 is a diagram illustrating an example of a comparison result of the first embodiment;
FIGs. 19A to 19D illustrate a first diagram for describing a second embodiment;
FIGs. 20A and 20B illustrate a second diagram for describing the second embodiment; and
FIGs. 21A to 21D illustrate a diagram for describing a third embodiment.

### DESCRIPTION OF EMBODIMENTS

### (First Embodiment)

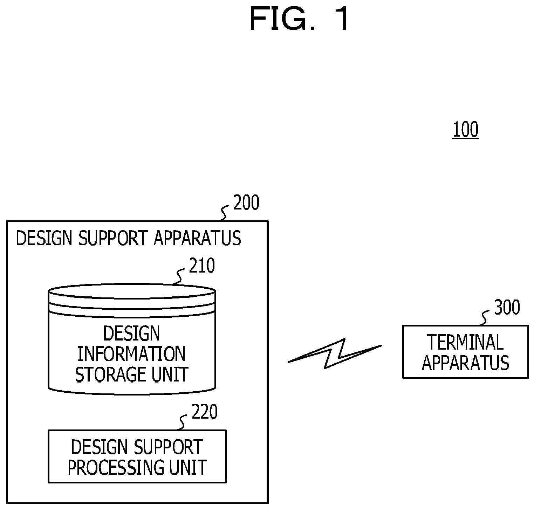

Hereinafter, a first embodiment will be described with reference to the drawings. FIG. 1 is a diagram illustrating an example of a design support system of the first embodiment. A design support system 100 of the present embodiment is an example of a drawing creation support system that supports creation of a drawing, and includes a design support apparatus 200 and a terminal apparatus 300. In the design support system 100, the design support apparatus 200 and the terminal apparatus 300 are coupled to each other via a network.

The design support apparatus 200 of the present embodiment is an example of a drawing creation support apparatus having a design information storage unit 210 and a design support processing unit 220.

The design information storage unit 210 stores information including design drawing data indicating various design drawings handled by the design support system 100 and procedure data indicating a procedure of combination of the design drawing. The design support processing unit 220 executes various kinds of processing according to operations of the terminal apparatus 300 with reference to the design information storage unit 210.

The terminal apparatus 300 of the present embodiment, for example, causes design drawing data stored in the design information storage unit 210 of the design support apparatus 200 to be displayed, and performs processing for changing the design drawing in accordance with an operation of the terminal apparatus 300. That is, for example, the terminal apparatus 300 is used mainly by a designer or the like that performs design.

In the example illustrated in FIG. 1, the design information storage unit 210 is assumed to be provided in the design support apparatus 200, but is not limited thereto. The design information storage unit 210 may be provided in an external apparatus that performs communication with the design support apparatus 200.

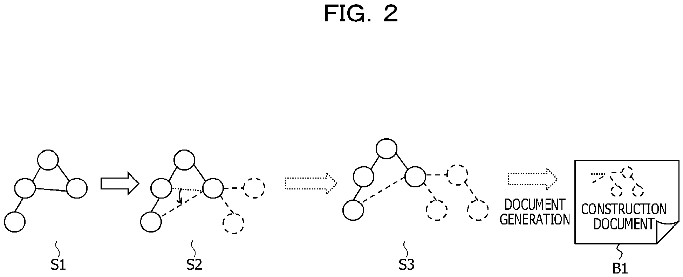

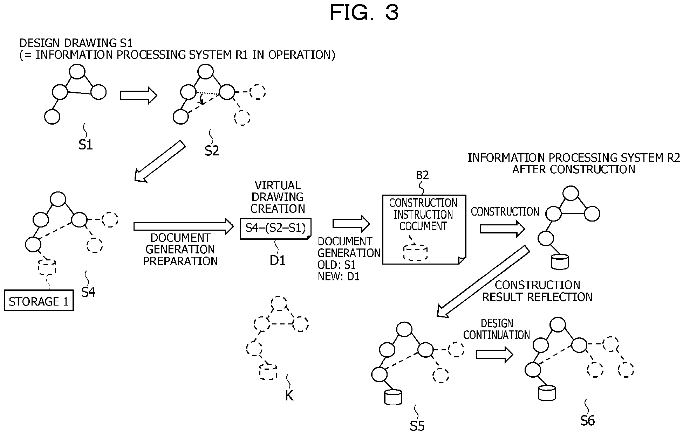

Next, an overview of operations of the design support system 100 according to the present embodiment will be described with reference to FIG. 2 and FIG. 3.

FIG. 2 is a first diagram for describing an overview of operations of the design support system according to the first embodiment. FIG. 2 is a diagram for describing a case where no sudden change occurs while a scheduled change is made. A design drawing S1 in FIG. 2 indicates an information processing system in operation, which is an example.

A design drawing S2 indicates a halfway state in which a designer is changing the design drawing S1 using the terminal apparatus 300 in order to perform the scheduled change to the information processing system in operation indicated by the design drawing S1. A design drawing S3 indicates a design drawing after the change for which the scheduled change has been completed.

The scheduled change to the information processing system may be an extension or the like of a server or a storage.

When the design drawing S3 is completed, the design support system 100 generates construction instruction document data indicating a construction instruction document B1 for performing construction for changing the information processing system based on a difference between the design drawing S1 and the design drawing S3. The construction instruction document is a document or the like instructing contents of construction for changing the system in operation to the information processing system indicated by the design drawing S3, and is distributed to a worker or the like who mainly performs the construction.

In this manner, the construction instruction document B1 is generated using the difference between the design drawing S1 of the information processing system in operation and the design drawing S3 after the change. That is, for example, when generating the construction instruction document data indicating the construction instruction document B1, the data indicating the difference between the design drawing of the information processing system in operation and the design drawing after the change is referred to.

FIG. 3 is a second diagram for describing an overview of operations of the design support system according to the first embodiment. FIG. 3 is a diagram for describing a case where a sudden change requirement occurs while a scheduled change is made.

A design drawing S4 in FIG. 3 indicates a design drawing in which addition of a storage 1 which is a sudden change is reflected to the design drawing S2 in a halfway state in which the design drawing S1 is being changed.

In the present embodiment, based on procedure data D1 indicating a procedure of combination of the design drawing S1, the design drawing S2, and the design drawing S4, which have already been created, a virtual design drawing K in which only the addition of the storage 1 which is the sudden change is reflected to the design drawing S1 is generated.

In the present embodiment, the construction instruction document data indicating a construction instruction document B2 is generated with reference to data indicating a difference between the virtual design drawing and the design drawing S1.

Specifically, for example, the design support apparatus 200 of the present embodiment receives input of the procedure data D1 indicating the procedure of the combination of the design drawings S1, S2, and S4 which have already been created, and reads design drawing data indicating each of the design drawings S1, S2, and S4 stored in the design information storage unit 210. The design support apparatus 200 combines the pieces of read design drawing data in accordance with the procedure indicated by the procedure data D1, and generates design drawing data indicating the virtual design drawing (virtual drawing) K.

In the example illustrated in FIG. 3, the procedure data D1 indicates a procedure for acquiring a difference between the design drawing S2 and the design drawing S1, and a procedure for further removing the difference between the design drawing S2 and the design drawing S1 from the design drawing S4. That is, for example, in the present embodiment, the virtual design drawing K is defined as "virtual design drawing K = design drawing S4 - (design drawing S2 - design drawing S1)" by the procedure data D1.

Here, '-' (subtraction symbol) means that a difference between design drawings (including a virtual drawing) is acquired. An operation is assumed to be carried out from left in the same manner as a normal mathematical expression, and an operation order is changed by using '(', ')' (parenthesis). In a case that '+' (addition symbol) is defined as merging of the drawings, it is also allowed to change an expression as in a normal mathematical expression. That is, for example, "virtual design drawing K = design drawing S4 - design drawing S2 + design drawing S1" and "virtual design drawing K = design drawing S1 + (design drawing S4 - design drawing S2)" are both equivalent to "virtual design drawing K = design drawing S4 - (design drawing S2 - design drawing S1)".

Therefore, the procedure data D1 may also be said to indicate an arithmetic procedure for the design drawing data already designed.

In the present embodiment, when the design drawings S1, S2, and S4 are combined by this procedure, design drawing data of the virtual design drawing in which the addition of the storage 1 which is the sudden change is reflected to the design drawing S1 is generated.

The design support apparatus 200 generates construction instruction document data indicating the construction instruction document B2 from the difference between the virtual design drawing K and the design drawing S1 of an information processing system R1 in operation.

When the design support apparatus 200 completes generation of the construction instruction document data of the construction instruction document B2, the construction worker performs construction in accordance with the construction instruction document B2, and the information processing system R1 in operation is changed to an information processing system R2 after the construction. The design drawing S4 is made to be a design drawing S5 obtained by adding the sudden change and the scheduled design change for which the work has already been completed, by a designer or the like. At this time, the design drawing to which the construction result by the sudden change is reflected is the virtual design drawing K generated by the procedure data D1, but as entity data, the procedure data D1 equivalent to the virtual design drawing K is regarded as a design drawing to which the construction result by the sudden change is reflected.

The designer may perform operation for continuously adding the scheduled change to the design drawing S5 to create a design drawing S6. The design drawing S6 is a design drawing in which the sudden design change and the scheduled change are further added to the design drawing S2.

In the present embodiment, by using the procedure data indicating the procedure of the combination of the design drawings in this manner, the design drawing data virtually indicating the design drawing may be generated.

Therefore, according to the present embodiment, it is possible to reduce waste of labor and time such as returning the design drawing S2 to the design drawing S1 once and newly creating the design drawing in which the sudden change is added to the design drawing S1, in order to generate the construction instruction document data indicating the construction instruction document B2 instructing the contents of the construction of the sudden change.

According to the present embodiment, it is not required to manually perform a correction or the like for generating the construction instruction document data from the difference between the design drawing S2 and the design drawing S4 and for deleting description relating to the difference between the design drawing S2 and the design drawing S1 from this construction instruction document data, and it is thus possible to achieve reduction in the burden to the worker and suppression of occurrence of a mistake.

In the present embodiment, even when the sudden design change is required, it is not required to branch and manage the design drawings created in the past, and it is possible to continuously manage the change in the design drawing regardless of a timing at which the design change request occurs.

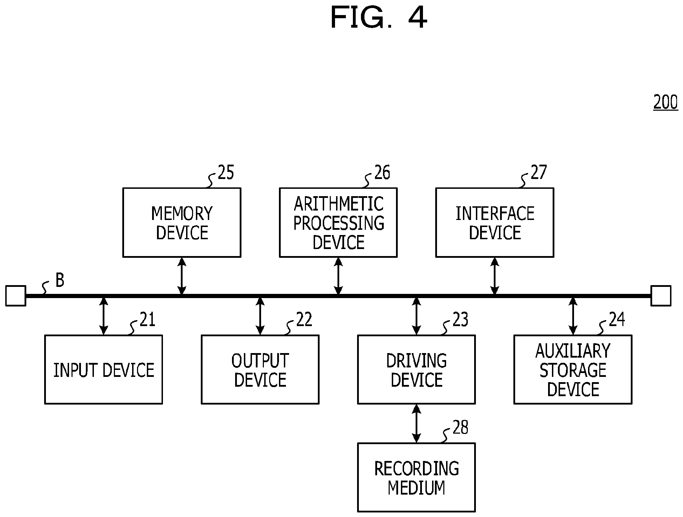

Next, the design support apparatus 200 according to the present embodiment will be described. FIG. 4 is a diagram illustrating an example of a hardware configuration of the design support apparatus according to the first embodiment.

The design support apparatus 200 according to the present embodiment is an information processing apparatus including an input device 21, an output device 22, a driving device 23, an auxiliary storage device 24, a memory device 25, an arithmetic processing device 26, and an interface device 27, which are coupled to one another via a bus B.

The input device 21 is used to input various information and is enabled by, for example, a keyboard, a pointing device, or the like. The output device 22 is used to output various information and is enabled by, for example, a display or the like. The interface device 27 includes a LAN card and is used for coupling to a network.

A design support program of the present embodiment is at least a part of various programs that implement the design support processing unit 220. The design support program is provided, for example, through distribution of a storage medium 28, downloading from the network, or the like. The storage medium 28 storing the design support program may be any of various types of storage media such as a storage medium configured to optically, electrically, or magnetically store information like a compact disc read-only memory (CD-ROM), a flexible disk, a magneto-optical disc, and so on, and a semiconductor memory configured to electrically store information like a ROM, a flash memory, and so on.

When the storage medium 28 storing the design support program is set in the driving device 23, the design support program is installed in the auxiliary storage device 24 from the storage medium 28 via the driving device 23. The design support program that is downloaded from the network is installed to the auxiliary storage device 24 through the interface device 27. An installation destination may be an auxiliary storage device, which is called a network drive, provided ahead of the interface device 27.

The auxiliary storage device 24 stores the installed design support program, and also stores the design information storage unit 210 described later, a required file, data, and the like. The memory device 25 reads the design support program from the auxiliary storage device 24 upon activation of the design support apparatus 200 and stores the read design support program. With this, during design work, files and data stored in the design information storage unit 210 or the like are developed and retained. The arithmetic processing device 26 implements various processes described later in accordance with the design support program stored in the memory device 25.

Since a hardware configuration of the terminal apparatus 300 of the present embodiment is the same as that of the design support apparatus 200, description thereof will be omitted. When the terminal apparatus 300 of the present embodiment is a smartphone or a tablet terminal, a display operation device having a display function and an input function may be included instead of the input device 21 and the output device 22.

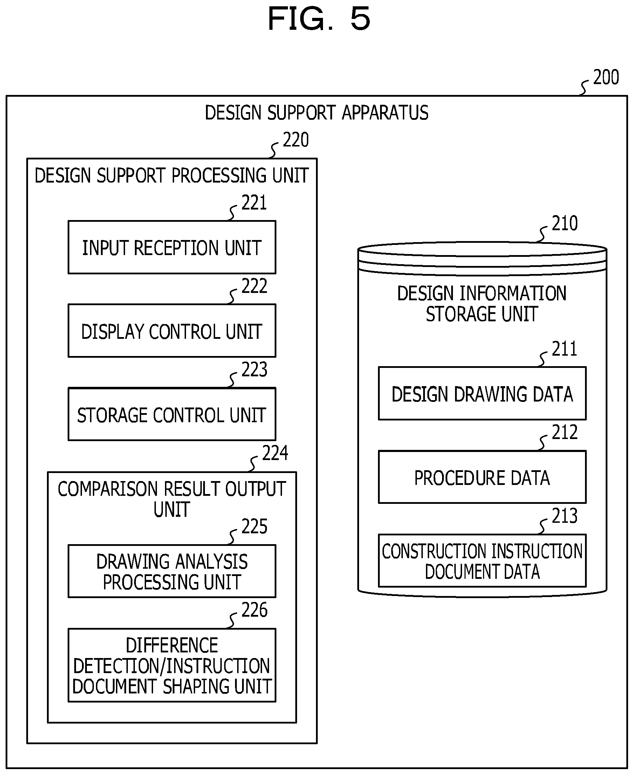

Next, a function of the design support apparatus 200 according to the present embodiment will be described with reference to FIG. 5. FIG. 5 is a diagram for describing a function of the design support apparatus according to the first embodiment.

The design support apparatus 200 according to the present embodiment includes the design information storage unit 210 and the design support processing unit 220.

The design information storage unit 210 stores design drawing data 211, procedure data 212, construction instruction document data 213, and the like. The design drawing data 211 is data representing a design drawing created by, for example, computer aided design (CAD) or the like. The procedure data 212 is input by a designer or the like through the terminal apparatus 300. The construction instruction document data 213 is construction instruction document data generated by the design support processing unit 220.

The design support processing unit 220 includes an input reception unit 221, a display control unit 222, a storage control unit 223, and a comparison result output unit 224.

The input reception unit 221 receives various inputs to the design support apparatus 200. The display control unit 222 causes the terminal apparatus 300 or the like to display a list screen of the design drawing data 211, an input screen of the procedure data 212, and the like. The display control unit 222 may cause the output device 22 of the design support apparatus 200 to output these screens.

The storage control unit 223 stores the design drawing data 211 and the procedure data 212, which are input, in the design information storage unit 210. The storage control unit 223 stores the construction instruction document data 213 generated by the design support processing unit 220 in the design information storage unit 210.

The comparison result output unit 224 includes a drawing analysis processing unit 225 and a difference detection/instruction document shaping unit 226.

When receiving input of two pieces of data to be compared, the drawing analysis processing unit 225 analyzes each of the two pieces of data and outputs an analysis result. One of the two pieces of data to be compared may be the design drawing data 211 and the other may be the procedure data 212, or the two pieces of data may be two pieces of the procedure data 212 or may be the two pieces of the design drawing data 211, for example. One of the two pieces of data may be empty data and the other may be the design drawing data 211, and in this case, a "new system construction" (an initial system is configured by construction in a situation where there is nothing) is indicated.

The analysis result is, for example, a result obtained by summarizing data required for each construction instruction document, or data processed in a form suitable for expression of each construction instruction document. The "construction instruction document" here is, for example, a "rack mounting/removal diagram" or a "wiring table". Details of the drawing analysis processing unit 225 will be described later.

The difference detection/instruction document shaping unit 226 compares, based on the two kinds of analysis results for each drawing output from the drawing analysis processing unit 225, these results, generates a comparison result as construction instruction document data, and outputs the generated data to the terminal apparatus 300 or the like.

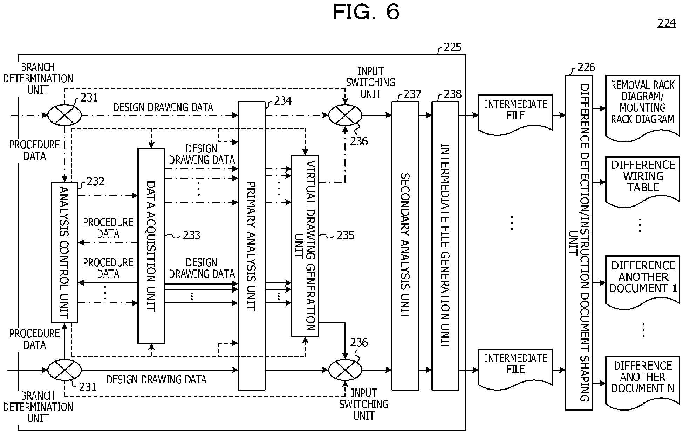

Next, referring to FIG. 6, a description will be further given of the drawing analysis processing unit 225 included in the comparison result output unit 224. FIG. 6 is a diagram for describing a function of the comparison result output unit according to the first embodiment.

The drawing analysis processing unit 225 of the present embodiment includes a branch determination unit 231, an analysis control unit 232, a data acquisition unit 233, a primary analysis unit 234, a virtual drawing generation unit 235, an input switching unit 236, a secondary analysis unit 237, and an intermediate file generation unit 238.

The branch determination unit 231 determines whether each of the two pieces of data to be compared by the drawing analysis processing unit 225 is the design drawing data or the procedure data. In other words, for example, the branch determination unit 231 determines the kind of the two pieces of data to be compared.

Specifically, for example, the branch determination unit 231 may determine whether the input data is the design drawing data or the procedure data in accordance with, for example, a format or the like of the input data. In the case where the input data is the design drawing data, the branch determination unit 231 outputs the input design drawing data to the primary analysis unit 234. In a case where the input data is the procedure data, the branch determination unit 231 outputs the input procedure data to the analysis control unit 232. The branch determination unit 231 switches input of the input switching unit 236 in accordance with the input data.

In the example illustrated in FIG. 6, the branch determination unit 231 is assumed to be provided corresponding to each of the two input systems, but is not limited thereto. It is sufficient that the branch determination unit 231 is provided as a functional unit that outputs the input data to the primary analysis unit 234 when the input data is the design drawing data, and outputs the input data to the analysis control unit 232 when the input data is the procedure data. That is, for example, it is also possible to use one branch determination unit 231 for the two pieces of input data in a time division manner. That is, for example, sequential processing of the two pieces of input data is allowed.

The analysis control unit 232 of the present embodiment analyzes the procedure data, and when the input data is procedure data, instructs the data acquisition unit 233 to read the existing design drawing data included in the procedure data. When the read data is the design drawing data, the analysis control unit 232 causes the data acquisition unit 233 to output the design drawing data to the virtual drawing generation unit 235. The analysis control unit 232 controls operations of the primary analysis unit 234 and the virtual drawing generation unit 235.

The data acquisition unit 233 acquires the design drawing data from the design information storage unit 210 in accordance with an instruction from the analysis control unit 232. The data acquisition unit 233 outputs the acquired design drawing data to the primary analysis unit 234 in accordance with an instruction from the analysis control unit 232. When the acquired drawing data is the procedure data, the data acquisition unit 233 outputs the procedure data to the analysis control unit 232. In this case, the analysis control unit 232 recursively performs analysis processing of the procedure data.

The primary analysis unit 234 extracts design information from the design drawing data indicating the design drawing, and analyzes the design information. The primary analysis unit 234 outputs an analysis result as design drawing data with a format used again in processing in a subsequent stage.

The design drawing data includes information of a plurality of constituent elements constituting a system illustrated by the design drawing. The constituent elements are, for example, various devices, coupling lines, and the like included in the design drawing. For example, when a server is included in design drawing, a main body of this server, options (Peripheral Component Interconnect (PCI) card, or the like), coupling between a connector of the main body and a connector of an option, coupling between the connector of the main body and a connector of an external hub, and the like are constituent elements.

In the design drawing, all the constituent elements included in the design drawing data are respectively provided with identifiers for identifying the respective constituent elements, and the primary analysis unit 234 outputs the analysis result of each element after primary analysis in a state of being linked with this identifier. That is, for example, granularity of the constituent element after the primary analysis is equivalent to granularity of the constituent element described in the drawing. The design drawing data after the primary analysis may be, for example, temporarily stored in the primary analysis unit 234, or may be stored in the design information storage unit 210 as the design drawing data 211. In the following description, the design drawing data after the primary analysis including the identifier of the constituent element including the design drawing data is referred to as analyzed data.

The virtual drawing generation unit 235 combines a plurality of pieces of analyzed data output from the primary analysis unit 234 in an order indicated by the procedure data, and generates analyzed data indicating the virtual design drawing data. Therefore, the virtual design drawing data generated by the virtual drawing generation unit 235 is generated as data in a format after conversion by the primary analysis unit 234.

In the following description, the virtual design drawing generated by the virtual drawing generation unit 235 may be expressed as a virtual drawing, and the analyzed data indicating the virtual drawing may be expressed as virtual drawing data.

The input switching unit 236 switches the data to be input to the secondary analysis unit 237. Specifically, for example, when the analyzed data is output from the primary analysis unit 234, the input switching unit 236 causes the analyzed data to be input to the secondary analysis unit 237. When the virtual drawing data is output from the virtual drawing generation unit 235, the input switching unit 236 causes the data output from the virtual drawing generation unit 235 to be input to the secondary analysis unit 237.

In the example illustrated in FIG. 6, the input switching unit 236 is assumed to be provided corresponding to each of the two input systems, but is not limited thereto. It is sufficient that the input switching unit 236 is provided as a functional unit that causes the virtual drawing data to be input to the secondary analysis unit 237 when the virtual drawing data is output from the virtual drawing generation unit 235, and causes the analyzed data to be input to the secondary analysis unit 237 when the analyzed data is output from the primary analysis unit 234.

The secondary analysis unit 237 integrates units of constituent elements obtained as a result of analysis by the primary analysis unit 234 into a unit which is easy to be understood by a worker who performs construction.

For example, constituent elements taken as a main body and an option and the like in a result of processing by the primary analysis unit 234 are collectively made to be a constituent element called a "housing".

In processing performed by the secondary analysis unit 237, the constituent element obtained as the result of the processing performed by the primary analysis unit 234 may be further divided. A specific example is a case in which two independent power distribution device systems are made to be one product contained in one housing. In this case, depending on an output document, since it is more convenient that two separate devices are present for the respective systems in some cases, not only the integration but also division may be performed.

The intermediate file generation unit 238 extracts information required for generating the construction instruction document data from the data output from the secondary analysis unit 237, and outputs the extracted information as an intermediate file. The intermediate file is data in a format processible by the difference detection/instruction document shaping unit 226.

Although not illustrated in FIG. 6, the two intermediate files may be generated for each construction instruction document type, for example. Even when one intermediate file corresponding to one drawing is generated, or the intermediate file is generated for each construction instruction document type, the construction instruction document data by the difference detection/instruction document shaping unit 226 may be generated for each construction instruction document type, or generated as one document by integrating a plurality of types. Examples of the construction instruction document type includes a "rack mounting/removal instruction document", a "wiring instruction document", and the like.

That is, for example, in the drawing analysis processing unit 225 of the present embodiment, results obtained by respectively analyzing the input two pieces of data are output as intermediate files in a form suitable for a required construction instruction document and difference detection. The drawing analysis processing unit 225 makes two pieces of data to have the same format so that differences between the input two pieces of data may be detected. The analysis result may be temporarily stored in the memory device 25 illustrated in FIG. 4 without being generated as intermediate files.

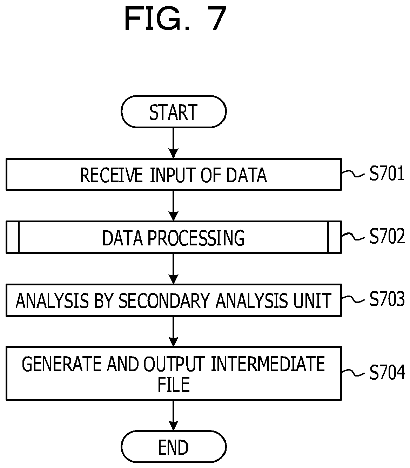

Processing of the design support apparatus 200 according to the present embodiment will be described below with reference to FIG. 7 to FIG. 11.

FIG. 7 is a first flowchart for describing processing of the design support apparatus according to the first embodiment. The design support processing unit 220 of the design support apparatus 200 of the present embodiment receives input of two pieces of data to be compared with the input reception unit 221 (step S701).

Subsequently, the design support processing unit 220 reads the input two pieces of data with the drawing analysis processing unit 225 (step S702). The processing at step S702 will be described in detail later.

Subsequently, the design support processing unit 220 analyzes the read two pieces of data by the secondary analysis unit 237 and outputs the result to the intermediate file generation unit 238 (step S703).

Subsequently, the design support processing unit 220 generates and outputs an intermediate file based on the analysis result of each of the two pieces of data read by the intermediate file generation unit 238 (step S704).

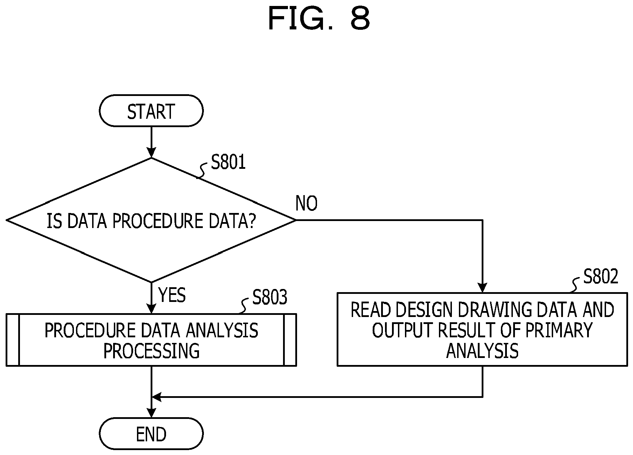

Next, referring to FIG. 8, a description will be given of processing for reading data. FIG. 8 is a second flowchart for describing processing of the design support apparatus according to the first embodiment. The processing illustrated in FIG. 8 describes the processing at step S702 in FIG. 7 in detail.

When the input of the two pieces of data is received by the input reception unit 221, the design support processing unit 220 of the design support apparatus 200 of the present embodiment determines whether the input data is the design drawing data or the procedure data, with the branch determination unit 231, for each of the two pieces of data (step S801).

In step S801, when the input data is the design drawing data, the drawing analysis processing unit 225 reads the design drawing data, performs primary analysis by the primary analysis unit 234, outputs the analyzed data (step S802), and the processing proceeds to step S703 in FIG. 7.

In step S801, when the input data is the procedure data, the drawing analysis processing unit 225 executes analysis processing of the procedure data (step S803), and the processing proceeds to step S703 in FIG. 7.

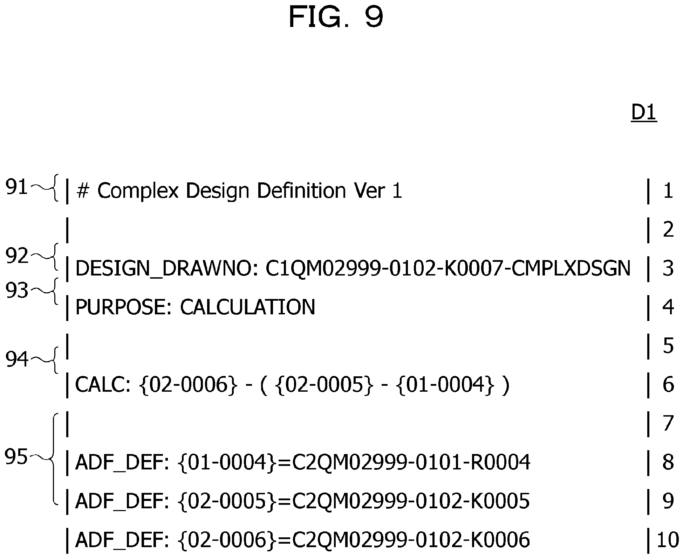

Next, prior to description of the analysis processing of the procedure data, the procedure data of the present embodiment will be further described. FIG. 9 is a diagram illustrating a specific example of the procedure data of the first embodiment.

Description 91 of the first line of the procedure data D1 illustrated in FIG. 9 indicates that this data is the procedure data. In description 92 of the third line of the procedure data D1, a "drawing number" of a virtual drawing defined by the procedure data is described. Description 93 of the fourth line of the procedure data D1 indicates that this drawing is a virtual drawing created by an arithmetic calculation based on the procedure data D1.

Description 94 of the sixth line of the procedure data D1 defines a mathematical expression indicating a procedure of combination of design drawings and a variable name. In the description 94, "{02-0006}", "{02-0005}", and "{01-0004}" are used as the variable names. In the description 94, the mathematical expression which is "{02-0006} - ({02-0005} - {01-0004})" is defined. In the following description, the mathematical expression indicating the procedure of combination of design drawings may be referred to as a calculation expression.

That is, for example, it may also be said that this mathematical expression is a mathematical expression in which a method of arithmetic calculation for the design drawing data specified as the variable name is defined.

Description 95 of the eighth line to the tenth line of the procedure data D1 is a definition portion defining the variable name included in the description 94.

In the description 95, a value of the definition portion defining the variable name "{01-0004}" is "C2QM02999-0101-R0004", and it is indicated that a value defined by the variable name "{01-0004}" is a design drawing of "C2QM02999-0101-R0004". However, the variable defined by the variable name "{01-0004}" is capable of holding, as a value, at least three kinds of values including a "design drawing" (value for specifying the design drawing), an "analyzed design drawing constituent elements" ("constituent elements" included in the "design drawing"), and a "residual constituent elements" (constituent elements to be eventually deleted), and changes from holding the value of "design drawing" to holding the value of "analyzed design drawing constituent elements" and the value of "residual constituent elements", as the processing proceeds.

In other words, for example, the value of the definition portion defining the variable name "{01-0004}" is also the design drawing data (or procedure data) specified by the variable name "{01-0004}", is also the analyzed data of the result obtained by analyzing this by the primary analysis unit 234 (the virtual drawing generation unit 235 is also included in the case of the procedure data), and is also the "residual constituent elements" as a temporary element in processing. That is, for example, the variable name is a value for specifying design drawing data of various states in processing.

In this case, in the initial state, the variable name "{01-0004}" corresponds to the design drawing S1, the variable name "{02-0005}" corresponds to the design drawing S2, and the variable name "{02-0006}" corresponds to the design drawing S4 (see FIG. 3). In the following description, the variable name "{01-0004}" may be expressed as S1, the variable name "{02-0005}" may be expressed as S2, and the variable name "{02-0006}" may be expressed as S4.

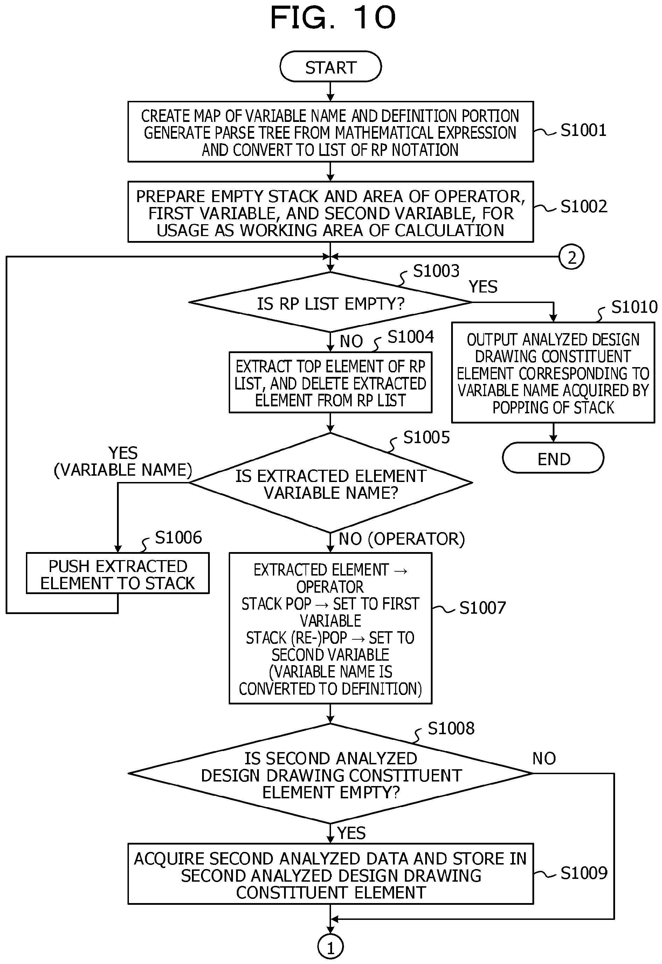

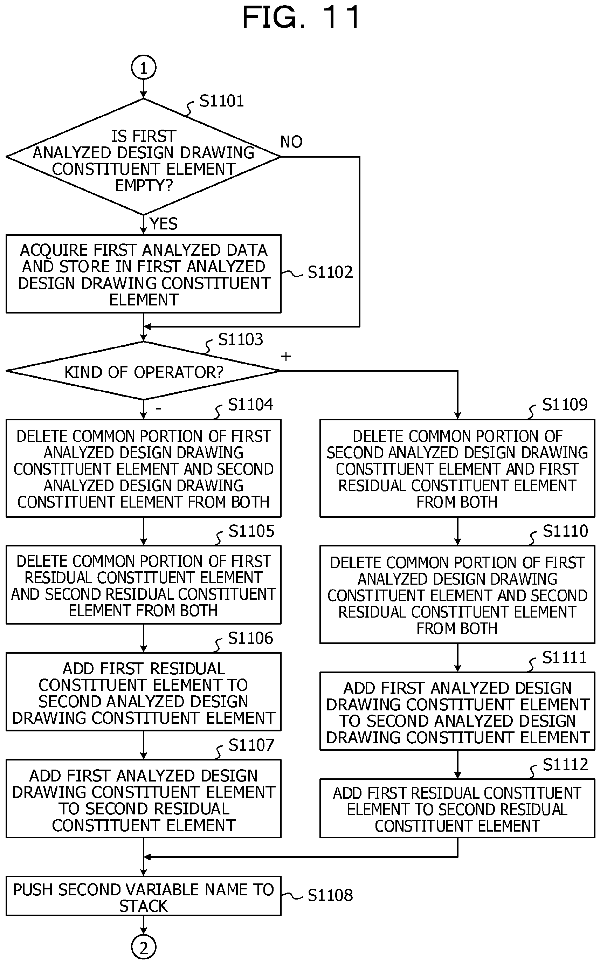

Based on the above, the analysis processing of the procedure data will be described below with reference to FIG. 10 and FIG. 11. FIG. 10 is a third flowchart for describing the processing performed by the design support apparatus according to the first embodiment, and FIG. 11 is a fourth flowchart for describing the processing performed by the design support apparatus according to the first embodiment. FIG. 10 and FIG. 11 illustrate the analysis processing of the procedure data in step S803 in FIG. 8 in detail.

When receiving the input of the procedure data from the branch determination unit 231, the analysis control unit 232 of the present embodiment creates and holds a map using a variable name included in the procedure data as a key. The analysis control unit 232 generates a reverse poland (RP) list from the mathematical expression indicated by the procedure data through a parse tree (step S1001).

Specifically, for example, when the procedure data D1 is input, the analysis control unit 232 creates a map in which the variable name and the definition portion corresponding to the variable name are associated using each of the variable names S1, S2, and S4 as a key from the description 95. The analysis control unit 232 generates the RP list from the mathematical expression indicated by the description 94 of the procedure data D1 through the parse tree.

Subsequently, the analysis control unit 232 prepares an empty stack for an arithmetic calculation and a storage area of an operator, a first variable, and a second variable as a working area (step S1002). Subsequently, the analysis control unit 232 determines whether or not the RP list is empty (step S1003). When the RP list is empty in step S1003, the processing proceeds to step S1010 described later.

In step S1003, when the RP list is not empty, the analysis control unit 232 extracts an element at the top of the RP list, and deletes the extracted element from the RP list (step S1004).

Subsequently, the analysis control unit 232 determines whether or not the extracted element is a variable name (step S1005). In step S1005, when the extracted element is a variable name, the analysis control unit 232 pushes (adds) the extracted element to the stack (step S1006), and returns to step S1003. That is, for example, in the stack, only the variable name is stored and an operator is not stored. In the following description, the element extracted in step S1004 may be referred to as an extracted element.

In step S1005, when the extracted element is not a variable name, that is, for example, when the extracted element is an operator, the analysis control unit 232 stores the extracted element in the operator area, pops (extracts) the variable name from the top of the stack, and stores it in the first variable area. The analysis control unit 232 pops again the variable name from the stack top and stores it in the second variable area (step S1007). In the following description, the variable name stored in the first variable area may be referred to as a first variable name, and the variable name stored in the second variable area may be referred to as a second variable name.

The variable name extracted in step S1007 is converted into a value of the "analyzed design drawing constituent elements", the "residual constituent elements", or the like of the definition portion registered in association with the variable name in the map.

Subsequently, the analysis control unit 232 determines whether or not the value of the "analyzed design drawing constituent element" of the variable corresponding to the second variable name is empty (step S1008). In other words, for example, the analysis control unit 232 determines whether or not the "analyzed design drawing constituent elements" (second analyzed design drawing constituent elements) of the variable content corresponding to the second variable name is present.

In step S1008, when the corresponding value is not empty, the processing proceeds to step S1101 illustrated in FIG. 11 without executing subsequent step S1009.

In step S1008, when the corresponding value is empty, the analysis control unit 232 causes the data acquisition unit 233 to read design drawing data of the design drawing corresponding to the second variable name from the design information storage unit 210 and to input the design drawing data to the primary analysis unit 234. The analysis control unit 232 acquires the analyzed data corresponding to the second variable name with the primary analysis unit 234, and then holds the analyzed data as a value of the "analyzed design drawing constituent elements" corresponding to the second variable name (step S1009). When the data read by the data acquisition unit 233 is the procedure data, the processing illustrated in FIG. 10 is recursively used to acquire analysis data. The acquired analysis data is held as a value of the "analyzed design drawing constituent elementss" corresponding to the second variable name in the same manner.

Subsequently, the analysis control unit 232 determines whether or not the value of the "analyzed design drawing constituent element" corresponding to the first variable name is empty (step S1101). In other words, for example, the analysis control unit 232 determines whether or not the "analyzed design drawing constituent elements" (first analyzed design drawing constituent elements) of the variable content corresponding to the first variable name is present.

In step S1101, when the corresponding value is not empty, the processing directly proceeds to step S1103 without executing subsequent step S1102. In step S1101, when the corresponding value is empty, the analysis control unit 232 causes the data acquisition unit 233 to read design drawing data of the design drawing corresponding to the first variable name from the design information storage unit 210 and to input the design drawing data to the primary analysis unit 234. The analysis control unit 232 acquires the analyzed data corresponding to the first variable name with the primary analysis unit 234, and then holds the analyzed data as a value of the "analyzed design drawing constituent elements" corresponding to the first variable name (step S1102). When the data read by the data acquisition unit 233 is the procedure data, the processing illustrated in FIG. 11 is recursively used to acquire analysis data. When data corresponding to the first variable and the second variable is the procedure data, the analysis data is acquired by applying recursive processing, but the recursion may of course be avoided by using a popular method for deploying the recursion through usage of the stack or the like.

In the following description, the analyzed data, the analyzed design drawing constituent element, the residual constituent element, and the like corresponding to the first variable name are referred to as first analyzed data, the first analyzed design drawing constituent elements, a first residual constituent elements, and the like, respectively.

When the first analyzed data and the second analyzed data are acquired, the analysis control unit 232 transfers the both to the virtual drawing generation unit 235.

Subsequently, the analysis control unit 232 determines the kind of the operator (step S1103). In step S1103, when the operator is '+', the processing branches to the processing from step S1109 which is described later.

In step S1103, when the operator is '-', the analysis control unit 232 deletes the constituent elements having common identification information of the first analyzed design drawing constituent elements and the second analyzed design drawing constituent elements from the both (step S1104).

Subsequently, the analysis control unit 232 deletes the constituent elements having common identification information of the first residual constituent elements and a second residual constituent elements from the both (step S1105). Subsequently, the analysis control unit 232 further adds the first residual constituent elements to the second analyzed design drawing constituent element (step S1106).

Subsequently, the analysis control unit 232 finally adds the first analyzed design drawing constituent elements to the second residual constituent elements (step S1107). The analysis control unit 232 pushes the second variable name to the stack (step S1108), and returns to step S1103 in FIG. 10.

In step S1103, when the operator is '+', the analysis control unit 232 deletes the constituent elements having common identification information of the second analyzed design drawing constituent elements and the first residual constituent elements from the both (S1109). Subsequently, the analysis control unit 232 deletes the constituent elements having common identification information of the first analyzed design drawing constituent element and the second residual constituent element from the both (step S1110).

Subsequently, the analysis control unit 232 adds the first analyzed design drawing constituent elements to the second analyzed design drawing constituent elements (S1111), and adds the first residual constituent element to the second residual constituent elements (S1112). The processing merges with the processing of '-' here, and as a result, the analysis control unit 232 pushes the second variable name to the stack (S1108).

The "identification information" will be supplemented. There is an expression "identifiers for identifying the respective constituent elements" in the above description. This identifier is included in the identification information of the present embodiment.

In many cases, in a tool such as CAD, an "identifier" is assigned to each required constituent element (mainly, each symbol). These constituent elements are associated with other information. Examples of the other information include a "name" of a constituent element for a human (designer, worker, or the like), "arrangement information" of a location at which a constituent element (device) is mounted, an IP address, and the like. These may be collectively referred to as an "element attribute", "property", or the like.

The element attribute relating to the "construction" and that not relating thereto are present in a mixed manner. Specifically, for example, if the "construction" is defined as only "rack mounting" work and "wiring" work, the "name" and the "IP address" are not required, but the "arrangement information" is indispensable as a required element attribute. In order to perform efficient construction even in a case of the same work contents, if the "name" is required for the constructor, the "name" is also indispensable for the element attribute.

Although, if the only document to be generated is a "construction procedure manual", it is considered to be sufficient that any of the element attributes described above is included, the "IP address" is also indispensable as the element attribute when output of "materials for operation" is also taken into consideration. Therefore, the "identification information" also includes, in addition to an "identifier" provided by a CAD tool or the like, an "element attribute" of a constituent element represented by the identifier.

In the present embodiment, all of the "element attributes" included in the constituent element may be included in the "identification information", but in a case where there are a large amount of "element attributes" and it takes time to identify "common to both", the required minimum "element attribute" determined according to the kind of the document, which is required as the final output, and a work procedure may be extracted. The case where it takes time to identify "common to both" depends mainly on the complexity of a configuration of a comparator for identification and on the scale of the drawing.

In the following description of the present embodiment, it is assumed that the identifier contained in the identification information is used to identify the constituent element.

In step S1003, when the RP list is empty, the virtual drawing generation unit 235 outputs the "analyzed design drawing constituent element" of the variable content corresponding to the variable name acquired by popping of the stack to the secondary analysis unit 237, or to the analysis control unit 232 when in the recursive processing (step S1010).

In the flowcharts of FIG. 10 and FIG. 11, detection and processing of an error are omitted.

For the error detection, for example, there are a method in which an error is detected as appropriate, processing is ended at the same time as the detection, and the designer is notified of the error, and a method in which the detected error is stored, and the processing is advanced by using an appropriate substitute value when the detected error is not fatal, and the errors are finally collectively presented to the designer. These are equivalent to a difference between performing an interpreter operation and performing a compiler operation, in a language processing system of a computer language.

Examples of the fatal error include a case in which, during the parse tree generation in step S1001, forgetting to close parenthesis is found in the calculation expression (a mathematical expression indicating the procedure of the combination of the design drawings), a case in which the stack is empty when the popping of the stack is requested as in step S1007, step S1010, or the like, and the like.

As the error with which the processing may be advanced by using an appropriate substitute value, for example, as in step S1009, step S1102, or the like, there is a case where a corresponding variable is not defined, or there is definition but a defined "design drawing" is not present in the design information storage unit 210. In this case, the empty drawing data may be substituted.

As the error with which the processing may be advanced by using an appropriate substitute value, for example, there is a case where the "residual constituent element" of the variable extracted in step S1010 is not empty, or a case where the stack does not become empty after the extraction. In this case, the processing may be advanced while ignoring the error.

As the error with which the processing may be advanced by using an appropriate substitute value, for example, there is a case or the like where constituent elements having common identification information in both the variables are present in the "addition" operation in steps S1106, S1107, S1111, and S1112. In this case as well, the processing may be advanced while ignoring the error.

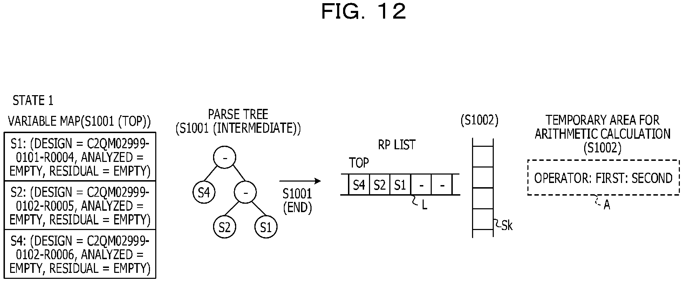

With reference to FIG. 12 to FIG. 14, a description will be given below of a change in a value of each variable in the case where the processing in the flow charts illustrated in FIG. 10 and FIG. 11 is executed.

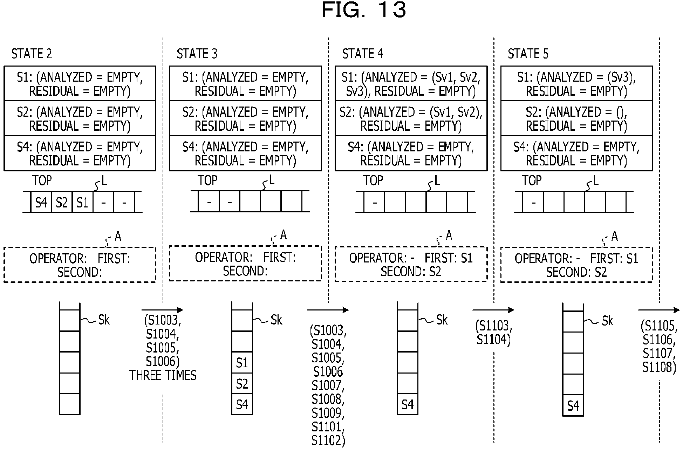

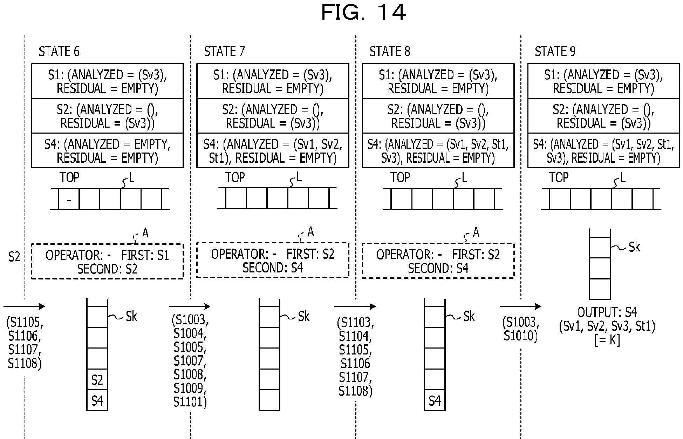

FIG. 12 is a first diagram for describing a change in a value of each variable of the first embodiment, FIG. 13 is a second diagram for describing the change in the value of each variable of the first embodiment, and FIG. 14 is a third diagram for describing the change in the value of each variable of the first embodiment.

The virtual drawing (K) is taken as the virtual drawing (K) = {02-0006} - ({02-0005} - {01-0004}) = S4 - (S2 - S1) in accordance with the description 94 of FIG. 9.

In each of the drawings, the constituent elements are taken as Sv1, Sv2, Sv3, and St1 by using only devices while omitting wirings. These constituent elements are variables included in each drawing.

First, it is assumed that a design drawing corresponding to a current system is taken as "S1 = {01-0004} = (Sv1, Sv2, Sv3)", a sudden change is requested at the time when "S2 = {02-0005} = (Sv1, Sv2)", which is obtained by removing Sv3 therefrom as a scheduled design change, is created, and a drawing of "S4 = {02-0006} = (Sv1, Sv2, St1)" is created.

These are initial values of the respective variables. The virtual drawing K is obtained by adding the sudden change to the current system, and therefore becomes "K = S1 + (St1) = (Sv1, Sv2, Sv3, St1)". Description will be given below that K may be obtained by executing the processing of the flow illustrated in FIG. 10 and FIG. 11. FIG. 12 to FIG. 14 illustrate a situation of execution.

First, as illustrated in a STATE 1 in FIG. 12, the analysis control unit 232 creates a variable map for associating a name and a value of each variable, and further converts a parse tree obtained by converting the calculation expression, into an RP list L. This processing is the processing in step S1001 in FIG. 10.

In the variable map of the STATE 1, a value defined by the variable name S1 is a design drawing which is "C2QM02999-0101-R0004", and the "analyzed design drawing constituent elements" and "residual constituent elements" each indicate an empty state.

Next, the analysis control unit 232 prepares an empty stack Sk and a temporary area A of each of the variable and the operator when performing an actual arithmetic calculation. This processing is the processing in step S1002 in FIG. 10. In FIG. 12, of the temporary area A, an operator area is indicated as "OPERATOR", the first variable area is indicated as "FIRST", and the second variable area is indicated as "SECOND".

In a state of the value of each variable in the variable map, "ANALYZED = EMPTY" indicates that the "analyzed design drawing constituent elements" has not been acquired and is empty for this reason.

In a STATE 2 in FIG. 13, the variable map, the stack Sk, and the temporary area A of the STATE 1 are clearly arranged. In the STATE 2, the "design drawing" data held in each variable is omitted.

In the STATE 2, since the RP list L is not empty, the analysis control unit 232 proceeds to the branch of "No" in step S1003, extracts the top of the RP list L, and deletes it from the RP list L. This processing is the processing in step S1004 in FIG. 10.

A variable called S4 is extracted here, which is not an operator. Therefore, the analysis control unit 232 proceeds to the branch of Yes in step S1005 in FIG. 10, and the variable name S4 is stacked in the stack Sk. This processing is the processing in step S1006 in FIG. 10. Since the top of the RP list L and the next top of the RP list L are all variables, as a result of the execution of the above route twice more, the state of the RP list L and the stack Sk finally becomes a STATE 3.

In the STATE 3, an operator'-' is extracted from the RP list L and deleted. Therefore, the analysis control unit 232 proceeds to the No branch in step S1005. As a result, in S1007, '-' is set in the storage area of the operator, 'S1' is set in the storage area of the first variable name, and 'S2' is set in the storage area of the second variable name, of the temporary area A.

In the STATE 3, the "analyzed design drawing constituent element" corresponding to the second variable is empty. Therefore, the analysis control unit 232 refers to and analyzes the design drawing defined by the variable name "S2" which is the second variable name, and acquires the "analyzed design drawing constituent elements" corresponding to the second variable name. This processing is the processing in steps S1008 and S1009 in FIG. 10.

The analysis control unit 232 performs the same processing for the variable name "S1" which is the first variable name, and acquires the "analyzed design drawing constituent elements" corresponding to the first variable name. This processing indicates the processing in steps S1101 and S1102 in FIG. 11. At this time point, the variable map, the RP list L, and the stack Sk change as illustrated in a STATE 4.

In step S1103, since the operator is '-', the analysis control unit 232 removes a common portion of the "analyzed design drawing constituent elements" corresponding to each of the first variable name and the second variable name. This processing indicates the processing in step S1104 in FIG. 11.

By the processing in step S1104, the "analyzed design drawing constituent elements" corresponding to the first variable name is only Sv3, and the "analyzed design drawing constituent elements" corresponding to the second variable name is empty. This state is illustrated in a STATE 5. In the STATE 5, the "residual constituent elements" corresponding to each of the first variable name and the second variable name is empty, so that there is no substantial change.

Next, the analysis control unit 232 sets Sv3 remaining in the first "analyzed design drawing constituent element" to the "residual constituent elements" corresponding to the second variable name. This processing is the processing in step S1107 in FIG. 11.

Finally, the analysis control unit 232 pushes the second variable name to the stack Sk. This processing is the processing in step S1108 in FIG. 11. By this processing, the STATE 5 changes to a STATE 6 illustrated in FIG. 14.

In the next loop, '-' is acquired through step S1003 and step S1004. Therefore, the analysis control unit 232 proceeds to the branch side of No in the determination in step S1005, and proceeds to step S1007 again. As a result of the execution of step S1007, in this case, the first variable name is S2, and the second variable name is S4. The operator is '-'. Since the second variable name S4 is acquired for the first time here, the "analyzed design drawing constituent elements" corresponding to the second variable name is empty.

Therefore, in steps S1008 and S1009, the analysis control unit 232 refers to and analyzes the design drawing defined by the variable name "S4" which is the second variable name, and sets the result to the "analyzed design drawing constituent elements".

At this time, for the first variable name S2, the "analyzed design drawing constituent elements" has already been acquired in the processing of the previous loop. Therefore, the analysis control unit 232 proceeds to the branch side of No in the determination in step S1101, and skips the execution of step S1102.

By the execution up to this state, the STATE 6 changes to a STATE 7. In the state of the value of each variable in the variable map of FIG. 14, "ANALYZED = ()" indicates that the "analyzed design drawing constituent elements" has already been acquired but the constituent elements are all deleted by a process of the arithmetic calculation, resulting in the empty state.

In step S1103, since the operator is '-', the analysis control unit 232 proceeds to step S1104. The "analyzed design drawing constituent elements" corresponding to the first variable name S2 is empty, and the common portion with the first variable name S4 is not present. Therefore, the state does not change in the processing in step S1104.

In S1105, the residual constituent element corresponding to the second variable name S4 is empty. Therefore, the state does not change in the processing in step S1105.

Next, since Sv3 is set for the first variable name S2 as the "residual constituent elements" in the processing in the previous loop, the analysis control unit 232 adds this to the "analyzed design drawing constituent element" corresponding to the second variable name S4 (step S1106).

As a result, the "analyzed design drawing constituent element" corresponding to the second variable name S4 becomes "(Sv1, Sv2, St1, Sv3)".

Next, in step S1107, the "analyzed design drawing constituent elements" corresponding to the first variable name S2 is empty. Therefore, the state does not change in the processing in step S1107. Finally, the analysis control unit 232 pushes the second variable name S4 to the stack Sk. This processing is the processing in step S1108 in FIG. 11. The STATE 7 changes to a STATE 8 by this processing.

In the next step S1003, the RP list L is empty. Therefore, the analysis control unit 232 proceeds to the branch of Yes. The analysis control unit 232 performs popping of the stack Sk here, outputs the "analyzed design drawing data" corresponding to the acquired second variable name S4 as a result of the calculation, and terminates the processing. This processing is the processing in step S1010 in FIG. 10. This situation is illustrated in a STATE 9. Output illustrated in the STATE 9 is (Sv1, Sv2, Sv3, St1), and it may be seen that the output is coincident with the virtual drawing K.

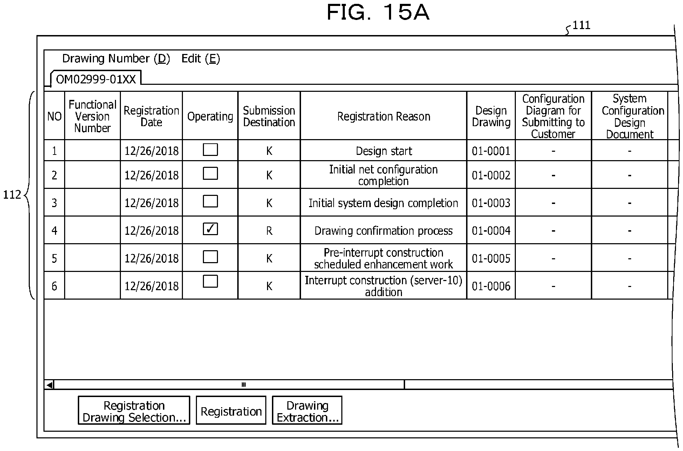

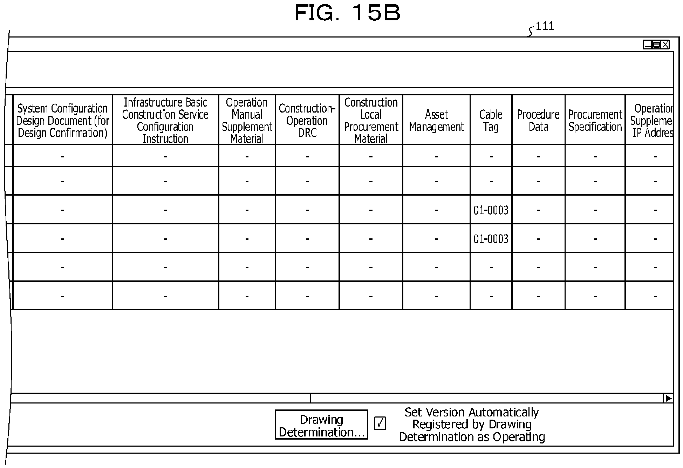

Next, generation of the procedure data will be described with reference to FIG. 15A to FIG. 17B. The procedure data is in a text format, and may therefore be directly input by using a text editor or the like, but it is more convenient to use a procedure data generating assist function described below because an error or the like does not occur. FIGs. 15A and 15B are a first diagram illustrating a display example of the terminal apparatus of the first embodiment.

A screen 111 illustrated in FIGs. 15A and 15B is an example of a screen displayed in the terminal apparatus 300 when request or the like for creating the construction instruction document data is made to the design support apparatus 200 by an operation of a designer who uses the terminal apparatus 300, for example.

Specifically, for example, when the design support processing unit 220 of the design support apparatus 200 receives a creation request of construction instruction document data or the like with the input reception unit 221, the display control unit 222 causes the terminal apparatus 300 to display the screen 111.

In the screen 111, a list 112 of data stored in the design information storage unit 210 is displayed. The list 112 may include the design drawing data and the procedure data.

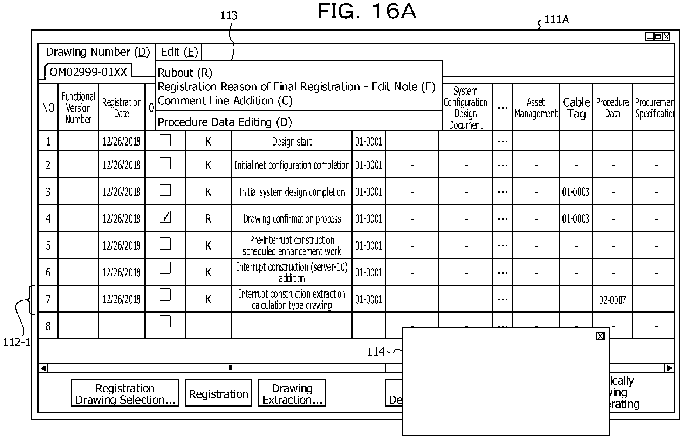

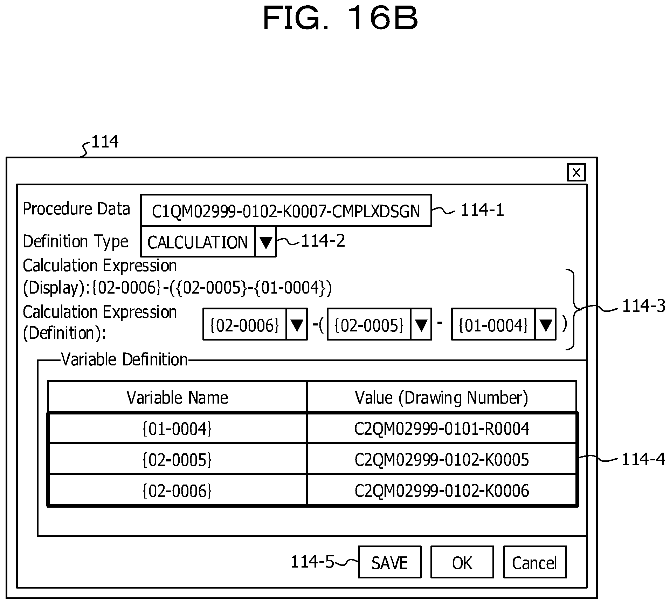

FIGs. 16A and 16B are a second diagram illustrating a display example of the terminal apparatus of the first embodiment. FIGs. 16A and 16B illustrate an example in which editing of the procedure data is selected in a selection field 113 displayed in a screen 111A, and an editing screen 114 of the procedure data is displayed. Fig. 16B illustrates the editing screen 114 in the Fig. 16A.

In the editing screen 114, a drawing number of the virtual design drawing data generated by the procedure data is input to an input field 114-1. In a selection field 114-2, a definition type indicating that this drawing is a virtual drawing generated by an arithmetic calculation based on a calculation expression is selected. Examples of the definition type may include a type indicating a program for which a computer language designed for virtual drawing generation is used, by inputting (selecting) PROCEDURE. In this case, a format of a 114-3 portion for performing definition of the calculation expression and displaying thereof may be changed, and may be a format for example, in which the storage location of the program file is described.

When the definition type is selected, the display control unit 222 of the present embodiment may display input fields 114-3 and 114-4 to be described later.

To the input field 114-3, a mathematical expression indicating a procedure of a combination of design drawings and a name of a design drawing to be combined are input. To the input field 114-4, a drawing number of analyzed data corresponding to the name of the design drawing input to the input field 114-3 is input.

That is, for example, the content input to the input field 114-1 becomes the description 92, the content input to the input field 114-2 becomes the description 93, the content input to the input field 114-3 becomes the description 94, and the content input to the input field 114-4 becomes the description 95, of the procedure data D1 illustrated in FIG. 9.

When input of each of the input fields described above is performed and an operation button 114-5 is operated in the editing screen 114, the design support apparatus 200 stores this procedure data D1 in the design information storage unit 210 by the storage control unit 223.

When the procedure data D1 is stored in the design information storage unit 210, virtual design drawing data indicated by this procedure data D1 is displayed as a new record 112-1 in the list 112.

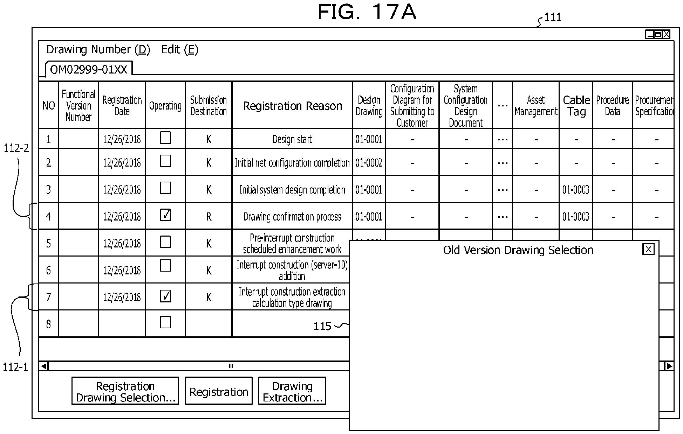

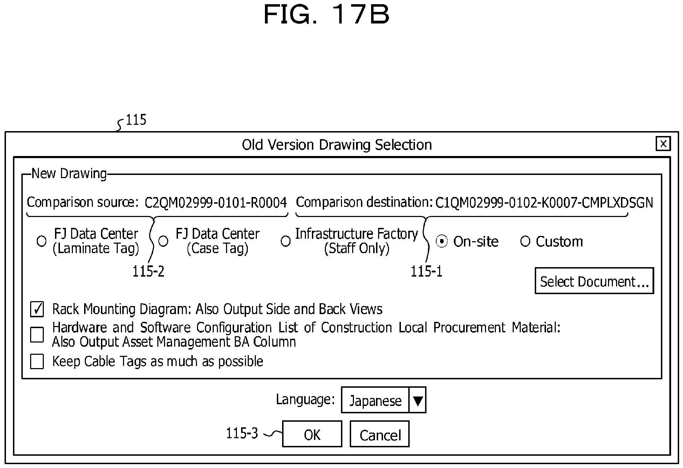

FIGs. 17A and 17B are a third diagram illustrating a display example of the terminal apparatus of the first embodiment. In FIGs. 17A and 17B, a screen 115 for indicating selection of two pieces of data to be compared and output of a comparison result is displayed. Fig. 17B illustrates the screen 115 in the Fig. 17A.

The two pieces of data selected here are first input data and second input data which are input to the drawing analysis processing unit 225 of the present embodiment.

In the screen 115, the two pieces of data to be compared are displayed in display fields 115-1 and 115-2. In this example, the record 112-1 indicating the procedure data D1 and a record 112-2 indicating the design drawing data are selected from the list 112.

When a selection button 115-3 is operated at the screen 115, the design support apparatus 200 outputs data indicating a comparison result between the virtual design drawing data generated by the procedure data D1 and the design drawing data indicated by the record 112-2 by the drawing analysis processing unit 225.

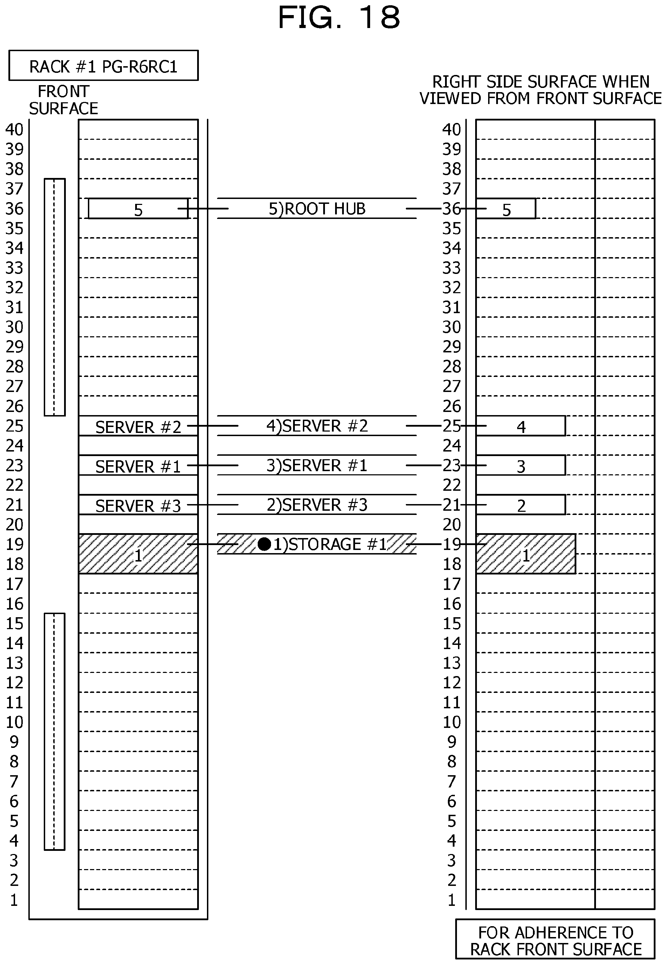

FIG. 18 is a diagram illustrating an example of a comparison result of the first embodiment. In FIG. 18, the hatched area is the difference between 112-2 and D1, and the rest is the apparatuses corresponding to the system in operation. In FIG. 18, construction instruction document data generated by the difference detection/instruction document shaping unit 226 is displayed with reference to a difference between the virtual design drawing data generated by the procedure data D1 and an intermediate file based on the analysis result of the design drawing data indicated by the record 112-2.

In the present embodiment, a constituent element to be removed and a constituent element to be added are reflected in the virtual design drawing data. Therefore, the construction instruction document data generated from the difference between the virtual design drawing data and the design drawing data indicated by the record 112-2 is output in a state in which manual modification is not required.

Although the display examples illustrated in FIG. 15A to FIG. 18 are displayed in the terminal apparatus 300, the embodiment is not limited thereto. The display examples illustrated in FIG. 15A to FIG. 18 may be displayed to a display or the like of the design support apparatus 200, and it is sufficient that the display is performed to a display unit of any apparatuses. In particular, for example, the comparison result in FIG. 18 is considered to be output by being printed as a construction instruction document.

In the present embodiment, as an example of the output of the comparison result by the drawing analysis processing unit 225, the construction instruction document data generated by referring to the difference of the comparison result is described, but the output of the comparison result is not limited to the construction instruction document data.

In the present embodiment, by performing the output of the comparison result through description by language for operating the design drawing, it is also possible to directly operate the design drawing and generate a design drawing corresponding to the virtual drawing based on the procedure data, as an actual drawing. However, in this case, although the processing procedure itself does not change, more detailed information such as description position information in an original design drawing and the like is additionally required.

Although it is not possible to normally arrange all figures through this method, it is possible to support manual correction by presenting a figure which could not be arranged automatically to the user. A example in the case where the figure may not be arranged is a case where the figure required for the sudden correction is arranged in a location deleted in the scheduled design. In contrast, in a case where the construction instruction document is directly generated from the virtual drawing without attempting to correct the actual design drawing, although this is also not perfect, such a problem is unlikely to occur since the figure is not required to be arranged..

In the present embodiment, depending on the types of the two pieces of data input to the drawing analysis processing unit 225, relationships between the entity system and the construction instruction document are as follows.

When input corresponding to an old drawing (one input) is empty and input corresponding to a new drawing (the other input) is a design drawing, a construction instruction document becomes a construction instruction document for the initial system.

When input corresponding to each of the old drawing and the new drawing is a design drawing, a construction instruction document becomes a construction instruction document for a change as scheduled without any sudden design change.

When input corresponding to the old drawing is a design drawing, and input corresponding to the new drawing is procedure data, a construction instruction document becomes a construction instruction document indicating a first sudden change.

When input corresponding to each of the old and new drawings is procedure data, a construction instruction document becomes a construction instruction document in a case where a sudden change occurs a plurality of times.

When input corresponding to the old drawing is procedure data and input corresponding to the new drawing is design drawing, a construction instruction document is a construction instruction document for construction in which a divergence between an entity system and a design drawing due to a sudden change ends. This state is a state where the sudden change and the scheduled change are merged, and a state where the design drawing and the entity system may be matched.

As described above, according to the present embodiment, it is possible to generate virtual drawing data for which a procedure of combination of the existing design drawing data is arbitrarily set. In other words, for example, in the present embodiment, the design drawing data may be freely combined without paying attention to the order in which the design drawing data to be combined is generated.

Therefore, according to the present embodiment, for example, even when the sudden change is requested during depiction for the scheduled change to the design drawing data, by using the drawing at the present time point at which the change depiction is being executed, the existing drawing at the beginning of creation, and the drawing obtained by adding the sudden change to the drawing at the present time point, the virtual drawing data in which only the sudden change is reflected to the existing design drawing data at the beginning of creation is created. According to the present embodiment, with this, it is possible to easily extract the original data for the construction instruction document corresponding to the difference between the existing drawing data at the beginning of creation and the virtual drawing data, that is, for example, the sudden change to the system in operation.

Therefore, in the present embodiment, it is possible to suppress increase in man-hours and workload when extracting a difference caused by change in a design drawing, and to support change in the design drawing.

### (Second Embodiment)

A second embodiment will be described below. In the embodiment described above, the procedure data is described as that for indicating the procedure of the combination of design drawings, but in the second embodiment, the procedure data also includes the procedure of combination of illustrations, figures, and the like.

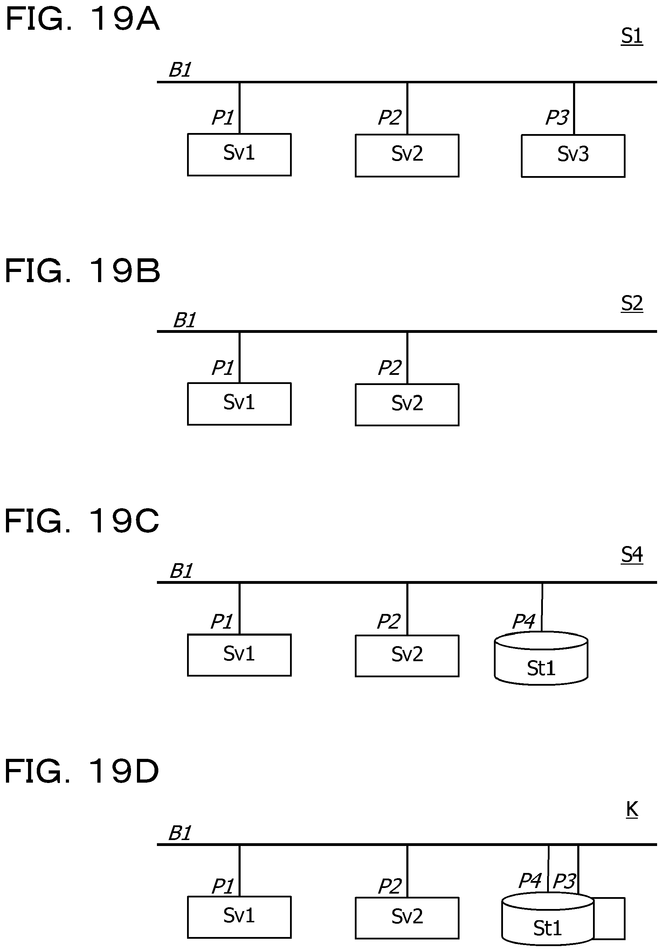

For example, a case is assumed in which an illustration or a figure is depicted with a tool that holds a figure by an object. FIGs. 19A to 19D illustrate a first diagram for describing the second embodiment.

In FIGs. 19A to 19D, an example is used in which a bus line B1 and lines P1 to P4 for branch lines thereof are added to the constituent elements illustrated in FIGs. 12 to 14.

A drawing indicating S1 in FIG. 19A is taken as S1 = (Sv1, Sv2, Sv3, B1, P1, P2, P3), a drawing indicating S2 in FIG. 19B is taken as S2 = (Sv1, Sv2, B1, P1, P2), and a drawing indicating S4 in FIG. 19C is taken as S4 = (Sv1, Sv2, St1, B1, P1, P2, P4).

In the present embodiment, a scenario for generating K = S4 - (S2 - S1) = (Sv1, Sv2, Sv3, St1, B1, P1, P2, P3, P4) is considered from the drawing indicating S1, the drawing indicating S2, and the drawing indicating S4.

It is assumed that only lines are illustrated for B1, P1, P2, P3, and P4, character strings are for explanation and not described in the figure. For clarity, these are expressed in italic.

In a tool that performs plotting by an object, various properties relating to a figure exist for each object. Examples include shape, size, color, thickness of a line, presence or absence of a text and contents thereof, a plotting position, and the like. In the present embodiment, all of them are used as identification information, and those having the identification information which is completely matched are each defined as a "common element".

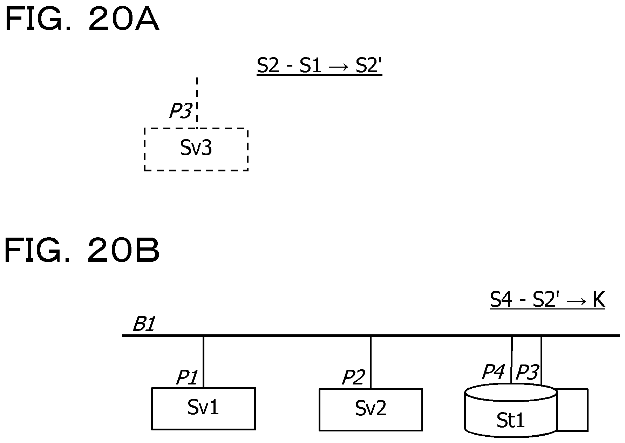

A result of performing a calculation operation in this situation is illustrated in FIGs. 20A and 20B. FIGs. 20A and 20B illustrate a second diagram for describing the second embodiment.

First, the analysis control unit 232 executes S2 - S1, and reassigns the result to S2. S2 to which the result of executing S2 - S1 is reassigned is represented as S2'. At this time, the common elements of S1 and S2 are (Sv1, Sv2, B1, P1, P2).

Therefore, the analysis control unit 232 deletes these from both of them, as processing corresponding to step S1104 in FIG. 11. As a result, since the remaining elements are (Sv3, P3) of the S1 side, the analysis control unit 232 leaves these as residual constituent elements of S2 as processing corresponding to step S1107.

A state in which processing is performed up to this point is illustrated in FIG. 20A. In FIG. 20A, Sv3 and P3 are represented by broken lines to indicate that they are the residual constituent elements. FIGs. 20A and 20B illustrate the second diagram for describing the second embodiment.

A result of executing S4 - S2 (= S4 - S2') is illustrated in FIG. 20B. In FIG. 20B, since the residual constituent element of S4 is empty and the analyzed design drawing constituent element (corresponding) of S2 is empty, processing corresponding to steps S1104, S1105, and S1107 does not cause change in the state, and only processing corresponding to step S1106 is substantially performed.

In a normal plotting tool, unlike the first embodiment in which output according to a drawing operation language in a CAD tool or the like is performed and it is performed with respect to the design drawing, figures are allowed to overlap with each other. Therefore, in the present embodiment, it is possible to perform output as a result with the overlapping figures as illustrated in FIG. 20B without causing an error or the like.

In such a case, depending on the purpose, the output may be used as it is, or the overlap may be shifted by a manual operation of a user to arrange the figures. It is user's choice how to do it.

### (Third Embodiment)

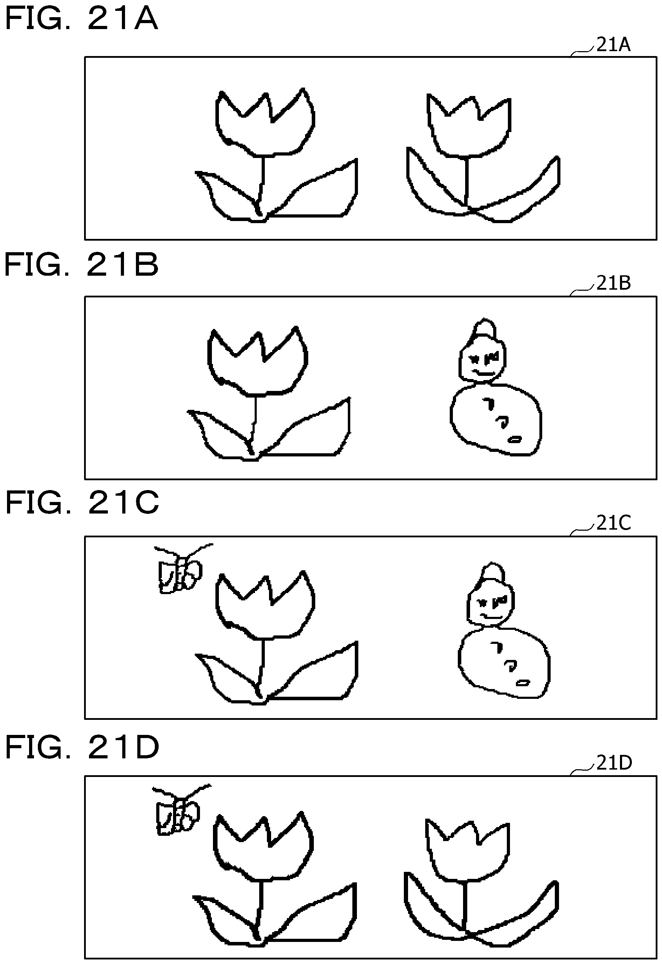

A third embodiment will be described below. FIGs. 21A to 21D illustrate a diagram for describing the third embodiment.

In the third embodiment, a plotting tool is considered which is the same plotting tool as the second embodiment, but expresses not by an object but by a dot for each pixel.

For example, a drawing 21A illustrated in FIG. 21A (corresponding to the drawing S1 in FIGs. 19A to 19D) is a drawing in which two flowers are depicted at the left and right sides. A drawing 21B illustrated in FIG. 21B (corresponding to the drawing S2 in FIGs. 19A to 19D) is a drawing in which the flower at the right side in the drawing 21A is changed to a snowman. A drawing 21C illustrated in FIG. 21C (corresponding to the drawing S4 in FIGs. 19A to 19D) is a drawing to which a butterfly is added to the vicinity of the flower at the left side in the drawing 21B.

In the present embodiment, it is considered whether or not a drawing (corresponding to virtual drawing K) in which the two flowers are present at the left and right sides and the butterfly is added to the vicinity of the flower at the left side may be generated by using the three drawings (pictures).

In this case, when, while taking a unit of a constituent element as a pixel, identification information is defined as a pixel coordinate (X, Y) and a pixel value (for example, a 32-bit value in total in which α value (transmittance), R (red), G (green), and B (blue) are each represented by 8 bits), it is possible to make a drawing 21D of "two flowers and a butterfly" from composition of "two flowers", "flower and a snowman", and "a flower, a snowman, and a butterfly" as illustrated in FIG. 21D by the very same operation.

Although the element constituting the "identification information" may be represented as the simple numerical value in the above-described embodiments, the present embodiment may also be applied to a case in which the element constituting the "identification information" is not represented as a simple numerical value.

As may be seen from this, in each of the embodiments, it may be said that addition/subtraction of numerical values is extended to addition/subtraction of ones which may not be represented by a numerical value (for example, object).

Unlike a numerical value, the object may not directly have a concept of a "negative value". Therefore, by taking the "negative value" as a form of an "element to be eventually deleted" called the "residual constituent element", each of the embodiments is expanded so as to be able to handle the "negative value". This point is different from an operation defined by '\' (or minus) used in the set theory. This is because B\A in the set arithmetic calculation represents only an operation of removing an element included in A from elements of B, and an element included in A and not included in B is ignored.

This expansion is not usual, and a state where the "residual constituent elements" is not empty at the end of the calculation is regarded as an abnormal state in the sense that the "elements to be eventually deleted" is not deleted. This is the reason of the error detected in step S1010' in FIG. 10. Therefore, in each of the embodiments, it does not mean that any variable may be designated as a variable of the calculation expression, and in the case based on the first embodiment, it is required to designate a suitable one from the design drawings generated in the time series of the design action. In contrast, if the suitable one is specified, the "residual constituent element" becomes empty, so that there is no problem in practical use.

The embodiments are not limited to the specifically disclosed embodiments, and various modifications and changes may be made without departing from the scope of the appended claims.

## Claims

1. A drawing creation support apparatus comprising:
an input reception unit configured to receive input of two pieces of data, one of the two pieces of data being data for indicating a procedure of a combination of a plurality of drawings;
a virtual drawing generation unit configured to generate virtual drawing data based on the data for indicating the procedure; and
an output unit configured to output a comparison result between the virtual drawing data that is generated and another comparison data of the two pieces of data.

2. The drawing creation support apparatus according to claim 1,
wherein, based on the data for indicating the procedure, the virtual drawing data is virtual drawing data obtained by combining a plurality of pieces of drawing data for respectively indicating the plurality of drawings in accordance with the procedure, and
the other comparison data is drawing data of a same format as the virtual drawing data or virtual drawing data generated based on the data for indicating the procedure.

3. The drawing creation support apparatus according to claim 2,
wherein the comparison result is construction instruction document data for indicating a content of construction corresponding to a difference between the virtual drawing data and the drawing data of the same format.

4. The drawing creation support apparatus according to claim 2,
wherein the comparison result includes the virtual drawing data and the drawing data of the same format.

5. The drawing creation support apparatus according to claim 3 or 4, wherein the data for indicating the procedure includes information configured to specify a plurality of pieces of drawing data for respectively indicating the plurality of drawings, and a mathematical expression configured to define a method of arithmetic calculation for the plurality of pieces of drawing data.

6. The drawing creation support apparatus according to claim 5,
wherein for the generated data, among the plurality of pieces of drawing data, from the first drawing data, a constituent element resulting from exclusion of a common constituent element included in the first drawing data and second drawing data is taken as a constituent element to be removed, and
from the second drawing data, a constituent element resulting from exclusion of the common constituent element is taken as a constituent element to be added.

7. The drawing creation support apparatus according to claim 5, for causing the computer to execute a process, the process including
causing a display unit to display a screen for input of information configured to specify a plurality of pieces of drawing data and the mathematical expression, included in the data for indicating the procedure.

8. The drawing creation support apparatus according to claim 2,
wherein the other data is another data for indicating the procedure,
the drawing creation support apparatus for causing the computer to execute a process, the process including,
outputting a comparison result between data generated based on the data for indicating the procedure and data generated based on the other data for indicating the procedure.

9. The drawing creation support apparatus according to any one of claims 1 to 8,
wherein the drawing data is design drawing data.

10. A drawing creation support program for causing a computer to execute a process, the process comprising:
receiving input of two pieces of data, one of the two pieces of data being data for indicating a procedure of a combination of a plurality of drawings;
generating virtual drawing data based on the data for indicating the procedure; and
outputting a comparison result between the virtual drawing data that is generated and another comparison data of the two pieces of data.

11. The drawing creation support program according to claim 10, wherein, based on the data for indicating the procedure, the virtual drawing data is virtual drawing data obtained by combining a plurality of pieces of drawing data for respectively indicating the plurality of design drawings in accordance with the procedure, and
the other comparison data is drawing data of a same format as the virtual drawing data or virtual drawing data generated based on the data for indicating the procedure.

12. The drawing creation support program according to claim 11, wherein the comparison result is construction instruction document data for indicating a content of construction corresponding to a difference between the virtual drawing data and the drawing data of the same format.

13. The drawing creation support program according to claim 11, wherein the comparison result includes
the virtual drawing data and the drawing data of the same format.

14. The drawing creation support program according to claim 12 or 13, wherein the data for indicating the procedure includes
information configured to specify a plurality of pieces of drawing data for respectively indicating the plurality of drawings, and
a mathematical expression configured to define a method of arithmetic calculation for the plurality of pieces of drawing data.

15. A drawing creation support method executed by a computer, the computer executing the drawing creation support method comprising:
receiving input of two pieces of data, one of the two pieces of data being data for indicating a procedure of a combination of a plurality of drawings;
generating virtual drawing data based on the data for indicating the procedure; and
outputting a comparison result between the virtual drawing data that is generated and another comparison data of the two pieces of data.
